(19) Europäisches Patentamt
European Patent Office
Office européen des brevets

(11) **EP 3 549 278 B1**

(12) **FASCICULE DE BREVET EUROPEEN**

(45) Date de publication et mention
de la délivrance du brevet:
**19.05.2021 Bulletin 2021/20**

(21) Numéro de dépôt: **17816902.5**

(22) Date de dépôt: **28.11.2017**

(51) Int Cl.:
*H04B 7/185* (2006.01)          *H04B 10/118* (2013.01)

(86) Numéro de dépôt international:
**PCT/FR2017/000223**

(87) Numéro de publication internationale:
**WO 2018/100257 (07.06.2018 Gazette 2018/23)**

(54) **PROCÉDÉ ET SYSTÈME DE COMMUNICATION PAR LASER ENTRE UNE STATION SOL ET UN ENGIN MOBILE.**

VERFAHREN UND SYSTEM ZUR LASERBASIERTEN KOMMUNIKATION ZWISCHEN EINER BODENSTATION UND EINEM MOBILEN FAHRZEUG

METHOD AND SYSTEM FOR LASER-BASED COMMUNICATION BETWEEN A GROUND STATION AND A MOBILE CRAFT.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2016 FR 1601714**

(43) Date de publication de la demande:
**09.10.2019 Bulletin 2019/41**

(73) Titulaire: **ArianeGroup SAS**
**75015 Paris (FR)**

(72) Inventeurs:
• **GOUY, Yann**
**31400 Toulouse (FR)**
• **ESMILLER, Bruno**
**78670 Villennes Sur Seine (FR)**
• **SERIER, Justine**
**94260 Fresnes (FR)**
• **DOMAINE, Yves**
**78540 Vernouillet (FR)**
• **STECK , Emilie**
**78800 Houilles (FR)**

(74) Mandataire: **Brevalex**
**95, rue d'Amsterdam**
**75378 Paris Cedex 8 (FR)**

(56) Documents cités:
**US-A1- 2006 179 456      US-A1- 2009 202 254**
**US-A1- 2011 311 234**

• **Jan Stupl ET AL: "Modulating Retro-Reflectors: Technology, Link Budgets and Applications", , 12 septembre 2012 (2012-09-12), XP055399610, Extrait de l'Internet: URL:https://ntrs.nasa.gov/archive/nasa/cas i.ntrs.nasa.gov/20120016693.pdf**

**Description**

La présente invention concerne un procédé et un système de communication par laser entre une station sol et un engin mobile, en particulier un satellite.

Le document US2009202254 décrit un système de communication à distance et de surveillance de données avec des satellites pourvus d'un rétro-réflecteur pour renvoyer des faisceaux laser d'interrogation émis par un émetteur laser installé dans une station sol.

Dans le cadre de la présente invention, la station sol est notamment pourvue d'un système d'émission comportant au moins un émetteur laser apte à émettre un faisceau laser en direction de l'engin mobile et d'un système de réception d'un faisceau laser renvoyé, et l'engin mobile est pourvu d'au moins un rétro-réflecteur.

De plus, dans le cadre de la présente invention, ce rétro-réflecteur est configuré pour moduler un faisceau laser, reçu de la station sol suivant une direction donnée, et pour le renvoyer, après modulation, suivant cette même direction.

Ce mode de communication par laser peut être utilisé pour communiquer avec tout engin mobile, en particulier un engin volant tel qu'un avion ou un drone, apte à voler à une certaine d'altitude au-dessus de l'atmosphère, comme précisé ci-dessous. Toutefois, ce mode de communication est utilisé, de préférence, pour un engin mobile correspondant à un satellite.

Bien que non exclusivement, ce mode de communication s'applique plus particulièrement à des satellites évoluant à basses altitudes, à une orbite terrestre basse LEO (pour « Low Earth Orbit » en anglais).

Or, pour de tels satellites, le temps de visibilité au sol, à chaque passage, est très court, de l'ordre de quelques minutes.

Aussi, la présente invention porte notamment sur l'amélioration des performances (augmentation du débit) d'une communication par laser dans un tel cas.

Par ailleurs, un tel mode de communication par laser, dans l'atmosphère, présente un inconvénient important. En effet, lorsque le faisceau laser émis à partir du sol se propage dans l'atmosphère, on observe une rétrodiffusion du rayonnement par le milieu. Ce phénomène de rétrodiffusion génère alors un niveau de signal qui est largement supérieur à celui provenant du rétro-réflecteur monté sur un satellite situé au-delà de l'atmosphère. En raison de ce phénomène, une communication basée sur une émission laser continue est exclue.

La présente invention a pour objet de remédier à cet inconvénient. Elle concerne un procédé de communication entre, d'une part, une station sol pourvue d'un système d'émission comportant au moins un émetteur laser apte à émettre un faisceau laser en direction d'un engin mobile et d'un système de réception d'un faisceau laser, et d'autre part, l'engin mobile qui est pourvu d'au moins un rétro-réflecteur apte à moduler un faisceau laser reçu de la station sol suivant une direction de réception et à le renvoyer suivant cette direction de réception, ledit engin mobile étant situé au-dessus d'une zone dite de rétrodiffusion de la Terre.

Selon l'invention, ledit procédé est remarquable en ce que :

- on génère au moins deux séquences d'émission/réception, chacune étant associée à un faisceau laser, les faisceaux laser de séquences d'émission/réception différentes présentant des longueurs d'onde différentes ;
- chacune desdites séquences d'émission/réception comprend des successions d'un couple de phases d'émission et de réception associées, une phase d'émission consistant à émettre un faisceau laser de la station sol vers l'engin mobile et une phase de réception consistant à recevoir un faisceau laser préalablement émis par la station sol pendant la phase d'émission associée et renvoyé par le rétro-réflecteur de l'engin mobile, la phase de réception étant désactivée tant que le faisceau laser émis durant la phase d'émission associée et rétrodiffusé par la zone de rétrodiffusion est apte à être reçu (et détecté) dans la station sol (c'est-à-dire est présent en entrée de réception de la station sol), la phase d'émission d'un couple de phases d'émission et de réception étant activée à la fin de la phase de réception du couple de phases d'émission et de réception précédent ; et
- les phases d'émission (et donc aussi de réception) d'une séquence d'émission/réception sont décalées temporellement par rapport aux phases d'émission (et donc aussi de réception) de l'autre séquence d'émission/réception.

Dans le cadre de la présente invention, la zone de rétrodiffusion est une zone située au-dessus de la Terre, dans laquelle, pour un faisceau laser émis, le flux laser rétrodiffusé par cette zone est au moins de l'ordre de grandeur du flux laser renvoyé par le rétro-réflecteur.

Ainsi, la désactivation de la réception d'un faisceau laser, pendant le passage (propagation allée et retour vers la station sol) dans la zone de rétrodiffusion (correspondant sensiblement à l'atmosphère) du faisceau laser émis, empêche de perturber la réception par un phénomène de rétrodiffusion, et permet donc d'utiliser un faisceau laser pour la communication.

De plus, on génère au moins deux séquences d'émission/réception, chacune étant associée à un faisceau laser donné, de telle sorte que, pendant la durée de désactivation d'une séquence donnée, on active au moins en partie au moins une autre séquence. Ceci permet d'augmenter le débit.

Ainsi, grâce à l'invention, on est en mesure de réaliser une communication par laser, qui n'est pas perturbée par la rétrodiffusion et qui présente un débit élevé

Dans un mode de réalisation préféré, on génère trois séquences différentes d'émission/réception. Ceci permet d'augmenter davantage le débit et surtout de créer une communication continue, comme précisé ci-dessous.

Dans ce mode de réalisation préféré, au moins deux séquences d'émission/réception successives, parmi lesdites trois séquences d'émission/réception, se chevauchent partiellement d'un point de vue temporel.

Dans une première variante, au moins une partie des données générées pendant le chevauchement temporel, via les faisceaux laser correspondants, est utilisée pour réaliser une synchronisation des informations transmises pour deux séquences successives.

En outre, dans une seconde variante, l'un des faisceaux laser est modulé pendant une partie du chevauchement temporel pour transmettre un message dit montant de la station sol vers l'engin mobile.

Par ailleurs, de façon avantageuse, pour un couple de phases d'émission et de réception associées (d'une séquence d'émission/réception) :

- la phase d'émission est activée à la désactivation de la phase de réception du couple précédent, et elle est désactivée à la fin d'une durée T1 après son activation, la durée T1 vérifiant la relation suivante :

$$T1 = (AC+BC)/c$$

dans laquelle :

- c est la vitesse de la lumière dans le milieu considéré ;
- AC est la distance entre la station sol et l'engin mobile ; et
- BC = AC - AB, AB étant la distance de propagation du faisceau laser émis dans la zone de rétrodiffusion ; et

- la phase de réception est activée au terme d'une durée T2 après la désactivation de la phase d'émission associée, et elle est désactivée à la fin d'une durée T3 après son activation, les durées T2 et T3 vérifiant les relations suivantes :

$$T2 = AB/c$$

$$T3 = T1.$$

De préférence, la distance AB est déterminée à partir de la hauteur de la zone de rétrodiffusion et de l'angle d'élévation du faisceau laser émis.

La présente invention concerne également un dispositif d'émission/réception destiné à être installé dans une station sol et à Z une communication entre, d'une part, la station sol et d'autre part, un engin mobile qui est pourvu d'au moins un rétro-réflecteur apte à moduler un faisceau laser reçu suivant une direction de réception et à le renvoyer suivant cette direction de réception, ledit engin mobile étant situé au-dessus d'une zone dite de rétrodiffusion de la Terre.

Ledit dispositif d'émission/réception comporte au moins un système d'émission pourvu d'au moins un émetteur laser apte à émettre un faisceau laser en direction de l'engin mobile et au moins un système de réception d'un faisceau laser.

Selon l'invention, ledit dispositif d'émission/réception est configuré pour générer au moins deux séquences d'émission/réception, chacune étant associée à un faisceau laser, les faisceaux laser de séquences d'émission/réception différentes présentant des longueurs d'onde différentes, chaque séquence d'émission/réception comprenant des successions d'un couple de phases d'émission et de réception associées, une phase d'émission consistant à émettre un faisceau laser de la station sol vers l'engin mobile et une phase de réception consistant à recevoir un faisceau laser préalablement émis par la station sol pendant la phase d'émission associée et renvoyé par le rétro-réflecteur de l'engin mobile, ledit dispositif d'émission/réception étant configuré pour laisser désactivée chaque phase de réception tant que le faisceau laser émis durant la phase d'émission associée et rétrodiffusé par la zone de rétrodiffusion est apte à être reçu dans la station sol, ledit dispositif d'émission/réception étant configuré de plus pour activer la phase d'émission d'un couple de phases d'émission et de réception à la fin de la phase de réception du couple de phases d'émission et de réception précédent, les phases d'émission d'une séquence étant décalées temporellement par rapport aux phases d'émission de l'autre séquence.

Avantageusement, ledit dispositif d'émission/réception :

- est configuré pour générer trois séquences d'émission/réception ; et/ou
- comporte également un système de poursuite.

La présente invention concerne, en outre, un système de communication entre une station sol et un engin mobile, notamment un satellite. Selon l'invention, ce système de communication comporte un dispositif d'émission/réception tel que celui décrit ci-dessus, qui est installé dans la station sol, et au moins un rétro-réflecteur qui est monté sur l'engin mobile.

Les figures annexées feront bien comprendre comment l'invention peut être réalisée. Sur ces figures, des références identiques désignent des éléments semblables.

La figure 1 est une vue schématique d'un mode de communication sol/satellite, mis en œuvre par un système de communication par laser conforme à l'invention.

La figure 2 est le schéma synoptique d'un mode de réalisation particulier d'un dispositif d'émission/réception conforme à l'invention.

La figure 3 est un graphique permettant de préciser différentes distances prises en compte dans la mise en œuvre de la présente invention.

Les figures 4A et 4B illustrent des faisceaux lasers relatifs, respectivement, à une phase d'émission et une phase de réception.

La figure 5 est un graphique illustrant l'activation et la désactivation respectives de phases de détection de deux séquences différentes, en fonction du temps.

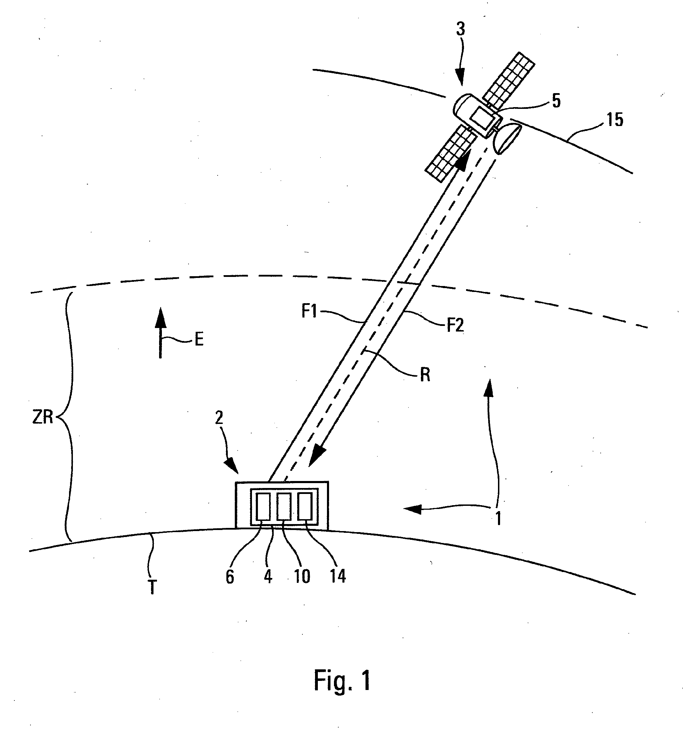

Le système 1 permettant d'illustrer l'invention et représenté schématiquement sur la figure 1, est destiné à générer une communication entre une station sol 2 installée sur la Terre T et un engin mobile (volant) 3, en l'occurrence un satellite.

Ce système 1 comporte :

-   un dispositif d'émission/réception 4 qui est installé dans la station sol 2 ; et
-   au moins un rétro-réflecteur 5 monté sur l'engin mobile 3.

Ledit rétro-réflecteur 5, par exemple de type sphérique, est apte, de façon usuelle, à moduler un faisceau laser F1 reçu de la station sol 2 suivant une direction R et à renvoyer le faisceau laser F2, après modulation, dans cette même direction R, comme représenté schématiquement sur la figure 1.

Dans le cadre de la présente invention, ledit engin mobile 3 se déplace au-dessus d'une zone dite de rétrodiffusion ZR de la Terre T, correspondant sensiblement à l'atmosphère. On considère, plus précisément, que la zone de rétrodiffusion ZR est une zone située au-dessus de la Terre T, dans laquelle, pour un faisceau laser émis, le flux laser rétrodiffusé par cette zone est au moins de l'ordre de grandeur du flux laser renvoyé par le rétro-réflecteur monté sur l'engin mobile qui se déplace au-dessus de cette zone. De préférence, on considère que l'on sort de la zone de rétrodiffusion, vers le haut (dans le sens de la flèche E), dès que le flux laser rétrodiffusé est du même ordre de grandeur que les perturbations connexes et les bruits de la liaison optique.

On notera que la diffusion atmosphérique est négligeable sur le trajet retour du faisceau laser, car l'intensité du faisceau laser réfléchi par le rétro-réflecteur est beaucoup plus faible que l'intensité du faisceau laser émis (environ un million de fois plus faible pour un rétro-réflecteur situé à 1000 km de la station sol).

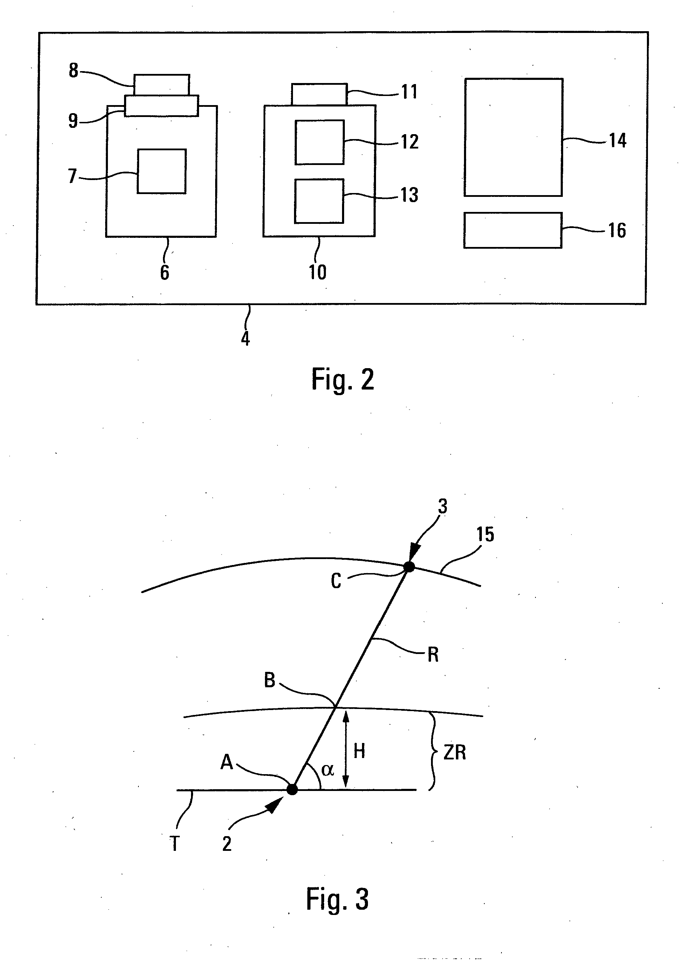

Ledit dispositif d'émission/réception 4 comporte, comme représenté très schématiquement sur la figure 2 :

-   au moins un système d'émission 6 pourvu d'au moins un émetteur (ou source) laser 7 apte à émettre un faisceau laser F1 en direction de l'engin mobile 3 (figure 1). Le système d'émission 6 comporte, de plus, les éléments suivants : un télescope d'émission 8 monté sur une tourelle motorisée 9 et des miroirs (non représentés) permettant de coupler l'émetteur laser 7 avec le télescope 8 ; et
-   au moins un système de réception 10 configuré pour recevoir un faisceau laser F2 renvoyé.

Ce système de réception 10 comporte, comme représenté sur la figure 2 :

-   un télescope 11 collectant le faisceau laser modulé et renvoyé par le rétro-réflecteur ;
-   un détecteur 12 transformant la modulation lumineuse reçue en modulation électrique ; et
-   un démodulateur 13 traitant la modulation électrique de manière à décoder les informations contenues dans le faisceau laser.

Le dispositif d'émission/réception 4 comporte également un système de poursuite 14.

Le système de poursuite 14 assure le pointage de l'émetteur laser 7 sur l'engin mobile 3 avec lequel on souhaite établir la communication. Ce pointage peut être réalisé :

-   en observant l'engin mobile 3 à l'aide d'un télescope et d'une caméra. Dans ce cas, on centre l'engin mobile 3 au centre du champ de la caméra. Le télescope de poursuite étant aligné avec le télescope d'émission, l'engin mobile 3 est alors illuminé par le faisceau laser (aux erreurs de parallaxe près). Dans cette configuration, l'engin mobile 3 doit être illuminé par le soleil pour être visible par le système de poursuite 14 ; ou
-   en connaissant précisément la trajectoire de l'engin mobile 3, en l'occurrence l'orbite 15 du satellite. Dans ce cas, les coordonnées de l'engin mobile 3 sont directement envoyées au système d'émission 6.

Selon l'invention, ledit dispositif d'émission/réception 4 comprend au moins un système d'émission 6 et au moins un système de réception 10 aptes à générer au moins deux séquences S1, S2 différentes d'émission/réception.

Chacune de ces séquences d'émission/réception S1, S2 permet d'émettre et de recevoir un faisceau laser associé. Les faisceaux laser de séquences d'émission/réception S1, S2 différentes présentent des longueurs d'onde différentes. Ces longueurs d'ondes sont choisies suffisamment éloignées l'une de l'autre pour qu'elles puissent être filtrées spectralement, afin de pouvoir discriminer un faisceau laser de l'autre.

Chaque séquence d'émission/réception S1, S2 comprend des successions d'un couple de phases, chaque couple de phases comprenant une phase d'émission PHE et une phase de réception PHR associées. Une phase d'émission PHE est destinée à émettre un faisceau laser F1 de la station sol 2 vers l'engin mobile 3 (à l'aide du système d'émission 6), et une phase de réception PHR est destinée à recevoir (à l'aide du système de réception 10) un faisceau laser F2 préalablement émis par la station sol 2 pendant la phase d'émission PHE associée et renvoyé par le rétro-réflecteur 5 de l'engin mobile 3 après modulation.

Selon l'invention, ledit dispositif d'émission/réception 4 est configuré, comme précisé ci-dessous :

- pour désactiver chaque phase de réception PHR pendant le passage dans la zone de rétrodiffusion ZR du faisceau laser F1 émis durant la phase d'émission PHE associée. De préférence, chaque phase de réception est désactivée tant que le signal de faisceau laser émis et rétrodiffusé est présent en entrée de réception de la station sol ; et
- pour activer la phase d'émission PHE d'un couple de phases d'émission et de réception, à la fin de la phase de réception du couple de phases d'émission et de réception précédent.

Pour ce faire, on calcule donc en fonction du temps :

- la durée d'émission pendant laquelle le faisceau laser F1 est émis par le système d'émission 6 qui est activé, tandis que le système de réception 10 associé est désactivé ; et
- la durée de réception pendant laquelle le faisceau laser F2 est reçu par le système de réception 10 qui est activé, tandis que le système d'émission 6 associé est désactivé.

Par conséquent, pour remédier au problème de la rétrodiffusion, on désactive (ou coupe) la réception laser pendant le temps où le faisceau laser F1 se propage dans la zone de rétrodiffusion ZR. Cette coupure correspond à peu près à la moitié du temps d'utilisation, ce qui diminue d'autant le débit de communication. Aussi, pour augmenter le débit, le système 1 utilise plusieurs couples de lasers/détecteurs (ou de séquences d'émission/réception) fonctionnant à des longueurs d'ondes différentes.

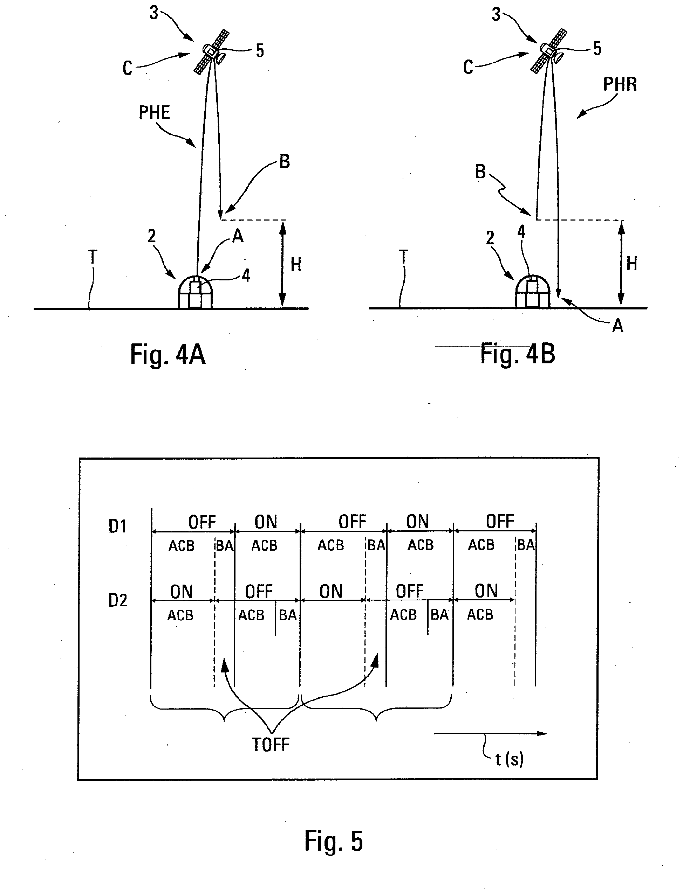

Les phases d'émission d'une séquence sont décalées temporellement par rapport aux phases d'émission de l'autre séquence, comme précisé ci-dessous en référence à la figure 5.

Plus précisément, pour un couple de phase d'émission PHE et de phase de réception PHR associées (d'une séquence d'émission/réception S1, S2) :

- la phase d'émission PHE (figure 4A) est activée à la désactivation de la phase de réception PHR du couple précédent, et elle est désactivée à la fin d'une durée T1 après son activation, la durée T1 vérifiant la relation suivante :

$$T1 = (AC+BC)/c$$

dans laquelle :

- c est la vitesse de la lumière dans le milieu considéré ;
- AC est la distance entre la station sol 2 (située à une position A) et l'engin mobile 3 (situé à une position C) ; et
- BC = AC - AB, AB étant la distance de propagation du faisceau laser F1 émis dans la zone de rétrodiffusion ZR. Le point B correspond à l'intersection entre la direction R (reliant A à C) et l'extrémité haute de la zone de rétrodiffusion ZR, comme représenté sur la figure 3 ; et

- la phase de réception PHR (figure 4B) est activée au bout d'une durée T2 après la désactivation de la phase d'émission associée, et elle est désactivée à la fin d'une durée T3 après son activation, les durées T2 et T3 vérifiant les relations suivantes :

$$T2 = AB/c$$

$$T3 = T1.$$

Dans un mode de réalisation particulier, le dispositif 4 comporte, comme représenté sur la figure 2, une unité de calcul 16 pour déterminer la distance AB. De préférence, la distance AB est déterminée à partir de la hauteur H de la zone de rétrodiffusion ZR et de l'angle d'élévation a du faisceau laser émis, comme représenté sur la figure 3.

Plus précisément, connaissant la trajectoire 15 de l'engin mobile 3 (à partir des paramètres orbitaux) et la position A (latitude/longitude) de la station sol 2, l'unité de calcul 16 déduit l'angle d'élévation $\alpha$ du faisceau laser (ou de la direction R) en fonction du temps, puis la distance AB sur laquelle la zone de rétrodiffusion ZR rétrodiffuse le rayonnement. L'unité de calcul 16 détermine également, de façon usuelle, la distance AC entre la station sol 2 et l'engin mobile 3 en prenant compte la trajectoire 15 (orbite) de ce dernier.

Les durées d'émission et de réception des autres séquences (couples système d'émission/système de réception) sont calculées de la même manière que précitée.

Sur la figure 5, on a représenté, en fonction du temps t exprimé par exemple en secondes s, l'activation (ON) et la désactivation (OFF) des phases de réception, notées respectivement D1 et D2, de deux séquences différentes,.

Le temps est illustré par ACB et BA correspondant au temps pendant lequel un faisceau laser parcourt, respectivement :

- les distances AC et CB (pour « ACB), comme représenté sur les figures 3, 4A et 4B ; et
- la distance BA (pour « BA »).

En utilisant deux faisceaux laser (avec des longueurs d'ondes différentes), il existe donc un laps de temps durant lequel aucune réception n'est réalisée. Ce laps de temps est égal à la durée TOFF du trajet BA, comme indiqué sur la figure 5.

Pour éviter une absence de recouvrement des émissions laser (et donc une absence de recouvrement des réceptions), le dispositif 4 génère, de préférence, trois séquences différentes d'émission/réception avec trois longueurs d'ondes différentes. Ceci permet d'assurer un lien de communication continu, en activant la phase de réception de la troisième séquence, au moins pendant tout le temps TOFF (figure 5) où les phases de réception D1 et D2 des deux premières séquences sont désactivées.

Dans ce mode de réalisation préféré comprenant trois séquences différentes d'émission/réception, avec une durée d'activation de la phase de réception de la troisième séquence qui est supérieure au temps TOFF, au moins deux séquences d'émission/réception successives, parmi lesdites trois séquences d'émission/réception, se chevauchent partiellement d'un point de vue temporel.

On peut répartir la durée de chevauchement sur seulement deux séquences particulières, ou bien sur les trois séquences (à chaque fois lors de la jonction de deux séquences successives). Les informations émises pendant ce chevauchement temporel peuvent être gérées et utilisées de différentes manières.

Dans une première variante, au moins une partie des données générées, via les faisceaux laser correspondants, pendant le chevauchement temporel, est utilisée pour réaliser une synchronisation des informations transmises.

En outre, dans une seconde variante, au moins une partie des données émises, via l'un des faisceaux laser, pendant le chevauchement temporel, est utilisée pour transmettre un message dit montant de la station sol 2 vers l'engin mobile 3. A titre d'illustration, on peut notamment transmettre au rétro-réflecteur 5 de l'engin mobile 3 une information permettant d'optimiser la modulation, par exemple en fonction de conditions d'observation.

Le système 1, tel que décrit ci-dessus, présente de nombreux avantages. En particulier, l'émission de plusieurs faisceaux laser avec les activations/désactivations précitées, permet de s'affranchir de la rétrodiffusion des faisceaux laser par la zone de rétrodiffusion. Cela permet donc d'augmenter le débit de communication et d'assurer un lien de communication continu durant tout le temps de visibilité lors du passage d'un satellite.

Bien que non exclusivement, la présente invention s'applique plus particulièrement à la communication avec des mini-satellites, des microsatellites ou des nano-satellites de type « Cubesats » ayant besoin de hauts débits de communication ou d'un lien de communication très directionnel avec une consommation électrique minimale. La présente invention est appropriée pour des satellites de ce type, qui présentent de faibles capacités d'emport de charge utile et qui disposent d'une faible puissance électrique disponible.

## Revendications

1. Procédé de communication entre, d'une part, une station sol (2) pourvue d'un système d'émission (6) comportant au moins un émetteur laser (7) apte à émettre un faisceau laser (F1) en direction d'un engin mobile (3) et d'un système de réception (10) d'un faisceau laser, et d'autre part, l'engin mobile (3) qui est pourvu d'au moins un rétro-réflecteur (5) apte à moduler un faisceau laser (F1) reçu de la station sol (2) suivant une direction de réception (R) et à le renvoyer suivant cette direction de réception (R), ledit engin mobile (3) étant situé au-dessus d'une zone dite de rétrodiffusion (ZR) de la Terre (T), dans lequel :

    - on génère au moins deux séquences d'émission/réception, chacune étant associée à un faisceau laser, les faisceaux laser de séquences d'émission/réception différentes présentant des longueurs d'onde différentes ;
    - chacune desdites séquences d'émission/réception comprend des successions d'un couple de phases d'émission et de réception associées, une phase d'émission consistant à émettre un faisceau laser (F1) de la station sol (2) vers l'engin mobile (3) et une phase de réception consistant à recevoir un faisceau laser (F2) préalablement émis par la station sol (2) pendant la phase d'émission associée et renvoyé par le rétro-réflecteur (5) de l'engin mobile (3), la phase de réception étant désactivée tant que le faisceau laser (F1) émis durant la phase d'émission associée et rétrodiffusé par la zone de rétrodiffusion (ZR) est apte à être reçu dans la station sol (2), la phase d'émission d'un couple de phases d'émission et de réception étant activée à la fin de la phase de réception du couple de phases d'émission et de réception précédent ; et
    - les phases d'émission d'une séquence d'émission/réception sont décalées temporellement par rapport aux phases d'émission de l'autre séquence d'émission/réception.

2. Procédé selon la revendication 1, dans lequel on génère trois séquences différentes d'émission/réception.

**3.** Procédé selon la revendication 2, dans lequel au moins deux séquences d'émission/réception successives, parmi lesdites trois séquences d'émission/réception, se chevauchent partiellement d'un point de vue temporel.

**4.** Procédé selon la revendication 3, dans lequel au moins une partie des données générées pendant le chevauchement temporel, via les faisceaux laser correspondants, est utilisée pour réaliser une synchronisation des informations transmises.

**5.** Procédé selon l'une des revendications 3 et 4, dans lequel l'un des faisceaux laser est modulé pendant une partie du chevauchement temporel pour transmettre un message dit montant de la station sol (2) vers l'engin mobile (3).

**6.** Procédé selon l'une quelconque des revendications précédentes, dans lequel, pour un couple de phases d'émission et de réception associées d'une séquence d'émission/réception :

- la phase d'émission est activée à la désactivation de la phase de réception du couple précédent, et elle est désactivée à la fin d'une durée T1 après son activation, la durée T1 vérifiant la relation suivante :

$$T1 = (AC+BC)/c$$

dans laquelle :

- c est la vitesse de la lumière ;
- AC est la distance entre la station sol (2) et l'engin mobile (3) ; et
- BC = AC - AB, AB étant la distance de propagation du faisceau laser (F1) émis dans la zone de rétrodiffusion (ZR) ; et

- la phase de réception est activée au terme d'une durée T2 après la désactivation de la phase d'émission associée, et elle est désactivée à la fin d'une durée T3 après son activation, les durées T2 et T3 vérifiant les relations suivantes :

$$T2 = AB/c$$

$$T3 = T1.$$

**7.** Procédé selon la revendication 6, dans lequel la distance AB est déterminée à partir de la hauteur (D) de la zone de rétrodiffusion (ZR) et de l'angle d'élévation (a) du faisceau laser (F1) émis.

**8.** Procédé selon l'une quelconque des revendications précédentes, dans lequel la zone de rétrodiffusion (ZR) est une zone située au-dessus de la Terre (T), dans laquelle, pour un faisceau laser émis, le flux laser rétrodiffusé par cette zone est au moins de l'ordre de grandeur du flux laser renvoyé par le rétro-réflecteur (5).

**9.** Dispositif d'émission/réception destiné à être installé dans une station sol (2) et à une communication entre, d'une part, la station sol (2) et d'autre part, un engin mobile (3) qui est pourvu d'au moins un rétro-réflecteur (5) apte à moduler un faisceau laser (F1) reçu suivant une direction de réception (R) et à le renvoyer suivant cette direction de réception (R), ledit engin mobile (3) étant situé au-dessus d'une zone dite de rétrodiffusion (ZR) de la Terre (T), ledit dispositif d'émission/réception (4) comportant au moins un système d'émission (6) pourvu d'au moins un émetteur laser (7) apte à émettre un faisceau laser (F1) en direction de l'engin mobile (3) et au moins un système de réception (10) d'un faisceau laser, le dispositif d'émission/réception étant configuré pour générer au moins deux séquences d'émission/réception, chacune étant associée à un faisceau laser, les faisceaux laser de séquences d'émission/réception différentes présentant des longueurs d'onde différentes, chaque séquence d'émission/réception comprenant des successions d'un couple de phases d'émission et de réception associées, une phase d'émission consistant à émettre un faisceau laser (F1) de la station sol (2) vers l'engin mobile (3) et une phase de réception consistant à recevoir un faisceau laser (F1) préalablement émis par la station sol (2) pendant la phase d'émission associée et renvoyé par le rétro-réflecteur (5) de l'engin mobile (3), ledit dispositif d'émission/réception (4) étant configuré pour laisser désactivée chaque phase de réception tant que le faisceau laser (F1) émis durant la phase d'émission associée et rétrodiffusé par la zone de rétrodiffusion (ZR) est apte à être reçu dans la station sol (2), ledit dispositif d'émission/réception (4) étant configuré de plus pour activer la phase d'émission d'un couple de phases d'émission et de réception à la fin de la phase de réception du couple de phases d'émission et de réception précédent, les phases d'émission d'une séquence étant décalées temporellement par rapport aux phases d'émission de l'autre séquence.

**10.** Dispositif selon la revendication 9 étant configuré en outre pour générer trois séquences d'émission/réception.

**11.** Dispositif selon l'une des revendications 9 et 10 comportant un système de poursuite (14).

12. Système de communication entre une station sol et un engin mobile,
ledit système comportant un dispositif d'émission/réception (4) tel que celui spécifié sous l'une quelconque des revendications 9 à 11, qui est installé dans la station sol (2), et au moins un rétro-réflecteur (5) apte à moduler un faisceau laser (F1) reçu de la station sol (2) suivant une direction de réception (R) et à le renvoyer après modulation dans cette direction de réception (R), ledit rétro-réflecteur (5) étant monté sur l'engin mobile (3).

**Patentansprüche**

1. Verfahren zur Kommunikation zwischen einerseits einer Bodenstation (2), die mit einem Sendesystem (6), das zumindest einen Lasersender (7) aufweist, der einen Laserstrahl (F1) in Richtung einer mobilen Einrichtung (3) aussenden kann, und mit einem Empfangssystem (10) zum Empfangen eines Laserstrahls versehen ist, und andererseits der mobilen Einrichtung (3), die mit zumindest einem Retroreflektor (5) versehen ist, der dazu geeignet ist, einen von der Bodenstation (2) in einer Empfangsrichtung (R) empfangenen Laserstrahl (F1) zu modulieren und ihn in dieser Empfangsrichtung (R) umzulenken, wobei sich die mobile Einrichtung (3) oberhalb einer sogenannten Rückstreuzone (ZR) der Erde (T) befindet,
wobei:

- zumindest zwei Sende-/Empfangssequenzen erzeugt werden, die jeweils einem Laserstrahl zugeordnet sind, wobei die Laserstrahlen unterschiedlicher Sende-/Empfangssequenzen unterschiedliche Wellenlängen aufweisen;
- jede der Sende-/Empfangssequenzen Abfolgen eines Paares von zugeordneten Sende- und Empfangsphasen umfasst, wobei eine Sendephase darin besteht, einen Laserstrahl (F1) von der Bodenstation (2) zur mobilen Einrichtung (3) auszusenden, und eine Empfangsphase darin besteht, einen Laserstrahl (F2) zu empfangen, der zuvor von der Bodenstation (2) während der zugeordneten Sendephase ausgesendet und von dem Retroreflektor (5) der mobilen Einrichtung (3) umgelenkt wurde, wobei die Empfangsphase deaktiviert wird, solange der während der zugeordneten Sendephase ausgesendete und über die Rückstreuzone (ZR) rückgestreute Laserstrahl (F1) in der Bodenstation (2) empfangen werden kann, wobei die Sendephase eines Paares von Sende- und Empfangsphasen am Ende der Empfangsphase des vorhergehenden Paares von Sende- und Empfangsphasen aktiviert wird; und
- die Sendephasen der einen Sende-/Empfangssequenz gegenüber den Sendephasen der anderen Sende-/Empfangssequenz zeitlich versetzt sind.

2. Verfahren nach Anspruch 1,
wobei drei unterschiedliche Sende-/Empfangssequenzen erzeugt werden.

3. Verfahren nach Anspruch 2,
wobei sich zumindest zwei aufeinanderfolgende Sende-/Empfangssequenzen aus den drei Sende-/Empfangssequenzen zeitlich teilweise überlagern.

4. Verfahren nach Anspruch 3,
wobei zumindest ein Teil der Daten, die während der zeitlichen Überlagerung von den entsprechenden Laserstrahlen erzeugt werden, dazu verwendet wird, eine Synchronisation der übertragenen Informationen zu erreichen.

5. Verfahren nach einem der Ansprüche 3 und 4,
wobei einer der Laserstrahlen während eines Teils der zeitlichen Überlagerung moduliert wird, um eine so genannte aufsteigende Nachricht von der Bodenstation (2) an die mobile Einrichtung (3) zu übertragen.

6. Verfahren nach einem der vorhergehenden Ansprüche,
wobei für ein Paar von zugeordneten Sende- und Empfangsphasen einer Sende-/Empfangssequenz :

- die Sendephase bei der Deaktivierung der Empfangsphase des vorhergehenden Paares aktiviert wird und am Ende einer Zeitdauer T1 nach ihrer Aktivierung deaktiviert wird, wobei die Zeitdauer T1 die folgende Beziehung erfüllt:

$$T1 = (AC+BC)/c$$

worin:

• c die Lichtgeschwindigkeit ist;
• AC die Entfernung zwischen der Bodenstation (2) und der mobilen Einrichtung (3) ist; und
• BC = AC - AB, wobei AB die Ausbreitungsentfernung des in der Rückstreuzone (ZR) ausgesendeten Laserstrahls (F1) ist; und

- die Empfangsphase am Ende einer Zeitdauer T2 nach der Deaktivierung der zugeordneten Sendephase aktiviert wird und am Ende einer Zeitdauer T3 nach deren Aktivierung deaktiviert wird, wobei die Zeitdauer T2 und die Zeitdauer T3 die folgenden Beziehungen erfüllen:

$$T2 = AB/c$$

$$T3 = T1.$$

**7.** Verfahren nach Anspruch 6,
wobei die Entfernung AB aus der Höhe (D) der Rückstreuzone (ZR) und dem Elevationswinkel (a) des ausgesendeten Laserstrahls (F1) bestimmt wird.

**8.** Verfahren nach einem der vorhergehenden Ansprüche,
wobei die Rückstreuzone (ZR) eine Zone oberhalb der Erde (T) ist, in der für einen ausgesendeten Laserstrahl der von dieser Zone rückgestreute Laserstrom zumindest in der Größenordnung des von dem Retroreflektor (5) umgelenkten Laserstroms liegt.

**9.** Sende-/Empfangsvorrichtung, die dazu bestimmt ist, in einer Bodenstation (2) installiert zu werden und für die Kommunikation zwischen einerseits der Bodenstation (2) und andererseits einer mobilen Einrichtung (3) bestimmt ist, die mit zumindest einem Retroreflektor (5) versehen ist, der dazu geeignet ist, einen in einer Empfangsrichtung (R) empfangenen Laserstrahl (F1) zu modulieren und ihn in dieser Empfangsrichtung (R) umzulenken, wobei sich die mobile Einrichtung (3) oberhalb einer sogenannten Rückstreuzone (ZR) der Erde (T) befindet, wobei die Sende-/Empfangsvorrichtung (4) zumindest ein Sendesystem (6) enthält, das mit zumindest einem Lasersender (7) versehen ist, der dazu geeignet ist, einen Laserstrahl (F1) in Richtung der mobilen Einrichtung (3) auszusenden, sowie zumindest ein Empfangssystem (10) zum Empfangen eines Laserstrahls,
wobei die Sende-/Empfangsvorrichtung dazu ausgelegt ist, zumindest zwei Sende-/Empfangssequenzen zu erzeugen, die jeweils einem Laserstrahl zugeordnet sind, wobei die Laserstrahlen unterschiedlicher Sende-/Empfangssequenzen unterschiedliche Wellenlängen aufweisen, wobei jede Sende-/Empfangssequenz Abfolgen eines Paars zugeordneter Sende- und Empfangsphasen umfasst, wobei eine Sendephase darin besteht, einen Laserstrahl (F1) von der Bodenstation (2) zu der mobilen Einrichtung (3) auszusenden, und eine Empfangsphase darin besteht, einen Laserstrahl (F1) zu empfangen, der zuvor von der Bodenstation (2) während der zugeordneten Sendephase ausgesendet und von dem Retroreflektor (5) der mobilen Einrichtung (3) umgelenkt wurde, wobei die Sende-/Empfangsvorrichtung (4) dazu ausgelegt ist, jede Empfangsphase deaktiviert zu lassen, solange der Laserstrahl (F1), der während der zugeordneten Sendephase ausgesendet und über die Rückstreuzone (ZR) rückgestreut wird, in der Bodenstation (2) empfangen werden kann, wobei die Sende-/Empfangsvorrichtung (4) ferner dazu ausgelegt ist, die Sendephase eines Paares von Sende- und Empfangsphasen am Ende der Empfangsphase des vorhergehenden Paares von Sende- und Empfangsphasen zu aktivieren, wobei die Sendephasen der einen Sequenz in Bezug auf die Sendephasen der anderen Sequenz zeitlich versetzt sind.

**10.** Vorrichtung nach Anspruch 9,
die ferner dazu ausgelegt ist, drei Sende-/Empfangssequenzen zu erzeugen.

**11.** Vorrichtung nach einem der Ansprüche 9 und 10, enthaltend ein Verfolgungssystem (14).

**12.** Kommunikationssystem zur Kommunikation zwischen einer Bodenstation und einer mobilen Einrichtung,
wobei das System eine in der Bodenstation (2) installierte Sende-/Empfangsvorrichtung (4) nach einem der Ansprüche 9 bis 11 und zumindest einen Retroreflektor (5) umfasst, der dazu geeignet ist, einen von der Bodenstation (2) in einer Empfangsrichtung (R) empfangenen Laserstrahl (F1) zu modulieren und ihn nach der Modulation in dieser Empfangsrichtung (R) umzulenken, wobei der Retroreflektor (5) an der mobilen Einrichtung (3) angebracht ist.

**Claims**

**1.** Method for communication between, on the one hand, a ground station (2) provided with an emission system (6) comprising at least one laser emitter (7) able to emit a laser beam (F1) in the direction of a mobile craft (3), and a reception system (10) for a laser beam, and on the other hand, the mobile craft (3) which is provided with at least one retro-reflector (5) able to modulate a laser beam (F1) received from the ground station (2) along a reception direction (R) and to return it along this reception direction (R), said mobile craft (3) being located above a so-called backscattering zone (ZR) of the Earth (T), wherein:

   - at least two emission/reception sequences are generated, each one being associated with a laser beam, the laser beams for different emission/reception sequences featuring different wavelengths;
   - each one of said emission/reception sequences comprises successions of a pair of associated emission and reception phases, an emission phase consisting of emitting a laser beam (F1) from the ground station (2) towards the mobile craft (3), and a reception phase consisting of receiving a laser beam (F2) previously emitted by the ground station (2) during the associated emission phase and returned by the retro-reflector (5) of the mobile craft (3), the reception phase being deactivated as long as the laser beam (F1) emitted during the associated emission phase and backscattered by the backscattering zone (ZR) is able to be received at the ground station (2), the emission phase of a pair of emission and reception phases being activated at the end of the reception phase of the preceding pair of emission and reception phases; and

- the emission phases of an emission/reception sequence are temporally offset with respect to the emission phases of the other emission/reception sequence.

2. Method according to Claim 1, wherein at least three different emission/reception sequences are generated.

3. Method according to Claim 2, wherein at least two successive emission/reception sequences, among said three emission/reception sequences, partially overlap from a temporal point of view.

4. Method according to Claim 3, wherein at least part of the data generated during the temporal overlap, via the corresponding laser beams, is used to carry out the synchronisation of transmitted information.

5. Method according to one of Claims 3 and 4, wherein one of the laser beams is modulated during part of the temporal overlap to transmit a message so-called ascending from the ground station (2) towards the mobile craft (3).

6. Method according to any one of the preceding claims, wherein, for a pair of associated emission and reception phases of an emission/reception sequence:

    - the emission phase is activated at the deactivation of the reception phase of the preceding pair, and it is deactivated at the end of a timeframe T1 after its activation, the timeframe T1 satisfying the following relationship:

    $$T1 = (AC+BC)/c$$

    wherein:

    • c is the speed of light
    • AC is the distance between the ground station (2) and the mobile craft (3); and
    • BC = AC - AB, AB being the propagation distance of the laser beam (F1) emitted in the backscattering zone (ZR); and

    - the reception phase is activated at the end of a timeframe T2 after the deactivation of the associated emission phase, and it is deactivated at the end of a timeframe T3 after its activation, the timeframes T2 and T3 satisfying the following relationships:

    $$T2 = AB/c$$

    $$T3 = T1.$$

7. Method according to Claim 6, wherein the distance AB is determined from the height (D) of the backscattering zone (ZR) and the angle of elevation (a) of the laser beam (F1) emitted.

8. Method according to any one of the preceding claims, wherein the backscattering zone (ZR) is a zone located above the Earth (T), in which, for an emitted laser beam, the laser flux backscattered by this zone is of at least the order of magnitude of the laser flux returned by the retro-reflector (5).

9. Emission/reception device intended to be arranged in a ground station (2) and for communication between, on the one hand, the ground station (2) and on the other hand, a mobile craft (3) that is provided with at least one retro-reflector (5) able to modulate a laser beam (F1) received along a reception direction (R) and to return it along this reception direction (R), said mobile craft (3) being located above a so-called backscattering zone (ZR) of the Earth (T), said emission/reception device (4) comprising at least one emission system (6) provided with at least one laser emitter (7) able to emit a laser beam (F1) in the direction of the mobile craft (3) and at least one laser beam reception system (10),
said emission/reception device being configured to generate at least two emission/reception sequences, each one being associated with a laser beam, the laser beams for the different emission/reception sequences featuring different wavelengths, each emission/reception sequence comprising successions of a pair of associated emission and reception phases, an emission phase consisting of emitting a laser beam (F1) from the ground station (2) towards the mobile craft (3), and a reception phase consisting of receiving a laser beam (F1) previously emitted by the ground station (2) during the associated emission phase and returned by the retro-reflector (5) of the mobile craft (3), the aforementioned emission/reception device (4) being configured to leave each reception phase deactivated as long as the laser beam (F1) emitted during the associated emission phase and backscattered by the backscattering zone (ZR) is able to be received in the ground station (2), said emission/reception device (4) being also configured to activate the emission phase of a pair of emission and reception phases at the end of the reception phase of the preceding pair of emission and reception phases, the emission phases of one sequence being temporally offset with respect to the emission phases of the other sequence.

10. Device according to Claim 9, being further configured to generate three emission/reception sequences.

11. Device according to one of Claims 9 and 10, comprising a tracking system (14).

12. System for communication between a ground station and a mobile craft, said system comprising an emission/reception device (4) such as the one specified in any one of Claims 9 to 11, which is installed in the ground station (2), and at least one retro-reflector (5) able to modulate a laser beam (F1) received from the ground station (2) along a reception direction (R), and to return it after modulation in this reception direction (R), said retro-reflector (5) being mounted on the mobile craft (3).

Fig. 1

Fig. 2

Fig. 3

Fig. 4A

Fig. 4B

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009202254 A